# EUROPÄISCHE PATENTSCHRIFT

(11) **EP 1 373 972 B1**
(45) Veröffentlichungstag und Bekanntmachung des Hinweises auf die Patenterteilung: **18.05.2005**
(21) Anmeldenummer: 01916892.1
(22) Anmeldetag: 01.03.2001
(51) Int. Cl.: G02F 1/133

(54) **FLÜSSIGKRISTALLANZEIGEVORRICHTUNG MIT OPTOELEKTRONISCHEM BAUELEMENT UND VERFAHREN ZUM STEUERN DER HINTERLEUCHTUNG EINER SOLCHEN ANZEIGEVORRICHTUNG**
LIQUID CRYSTAL DISPLAY DEVICE COMPRISING AN OPTOELECTRONIC COMPONENT, AND METHOD FOR CONTROLLING THE BACKGROUND ILLUMINATION OF SUCH A DISPLAY DEVICE
DISPOSITIF D'AFFICHAGE A CRISTAUX LIQUIDES COMPORTANT UN COMPOSANT OPTOELECTRONIQUE ET PROCEDE DE COMMANDE DU RETROECLAIRAGE D'UN TEL DISPOSITIF D'AFFICHAGE

(30) Priorität: 21.11.2000 DE 10057696
(43) Veröffentlichungstag der Anmeldung: 02.01.2004
(73) Patentinhaber: SIEMENS AKTIENGESELLSCHAFT, 80333 München (DE)
(72) Erfinder: CLASS-DIETER, Klaus, 93161 Sinzing (DE); ECKMÜLLER, Robert, 94160 Ringelai (DE); KRAUS, Johannes, 93152 Nittendorf (DE)
(86) Internationale Anmeldenummer: PCT/DE2001/000772
(87) Internationale Veröffentlichungsnummer: WO 2002/042837

(56) Entgegenhaltungen:
- DE-A- 4 140 647
- US-A- 4 760 389
- US-A- 5 818 553
- US-A- 5 933 089

## Beschreibung

Die Erfindung betrifft ein LC-Display mit wenigstens einem optoelektronischem Bauelement und einer Lichtquelle zur Hinterleuchtung des Displays sowie ein Verfahren zur Steuerung der Hinterleuchtung.

Bei LC-Displays, die eine Hinterleuchtung aufweisen, kann eine Steuerung der Hinterleuchtung in Abhängigkeit von der Umgebungshelligkeit erfolgen. Dies ist insbesondere bei batteriebetriebenen oder mit Akku ausgerüsteten portablen Geräten vorteilhaft, da der Energieverbrauch einer Hinterleuchtung sehr hoch ist. Um eine zweckmäßige Steuerung der Hinterleuchtung zu ermöglichen, muss ein Lichtsensor, in der Regel eine Fotodiode, möglichst genau die Lichtstärke des auf das Display fallenden Umgebungslichts messen. Gerade bei kleinen Geräten ist eine günstige Anordnung des Sensors problematisch. Insbesondere muss eine unbeabsichtigte Abschattung, beispielsweise durch die Hände eines Benutzers, vermieden werden. Ähnliche Probleme treten bei Infrarotsensoren zum Empfangen von Signalen eines elektronischen Geräts (z.B. Fernbedienung) auf, die häufig ebenfalls in der Nähe eines Displays angeordnet sind.

Aus der DE 41 40 647 A1 ist ein LC-Display bekannt, das wenigstens eine Flüssigkristallschicht aufweist, bei der eine Lichtquelle zur Hinterleuchtung des LC-Displays an einer Seite der wenigstens einen Flüssigkristallschicht angeordnet ist, die einem Betrachter abgewandt ist und bei dem wenigstens ein optoelektronisches Bauelement, das an der Seite der wenigstens einen Flüssigkristallschicht angeordnet ist, die dem Betrachter abgewandt ist, zum Detektieren des Umgebungslichtes durch die Flüssigkristallschicht hindurch vorgesehen ist. Um das Umgebungslicht ohne Beeinflussung durch die Lichtquelle messen zu können, wird das von der Lichtquelle emittierte Licht mittels Eichmessungen ermittelt und in einer Tabelle abgelegt. Der von der Lichtquelle emittierte Wert wird von dem Wert abgezogen, der von dem optoelektronischen Bauelement ermittelt wurde. Die Merkmale des Oberbegriffs der unabhängigen Ansprüche sind aus diesem Dokument bekannt.

Aufgabe der Erfindung ist es, auf andere Weise den Einfluss der Hinterleuchtung auf das detektierte Licht auszuschließen.

Dieses Ziel wird mit den Merkmalen der unabhängigen Patentansprüche erreicht. Vorteilhafte Weiterbildungen der Erfindung sind Gegenstand der Unteransprüche.

Durch die Anordnung des optoelektronischen Bauelements hinter der Flüssigkristallschicht des Displays ist das optoelektronische Bauelement gut geschützt und abgedeckt untergebracht, kann aber trotzdem einfallendes Licht sensieren und somit die Intensität des Lichts oder übermittelte Signale detektieren. Ferner kann das optoelektronische Bauelement optional Signale durch die Flüssigkristallschicht hindurch zu einem externen Gerät senden. Für einen Datenaustausch zwischen einem an dem Display angeschlossenem elektronischen Gerät und einem externen Gerät eignet sich insbesondere das Infrarot-Spektrum.

Die Erfindung eignet sich besonders zum Bestimmen der Lichtstärke von Umgebungslicht, um eine Hinterleuchtung eines Flüssigkristall-Displays zu steuern.

Die Messung der Lichtstärke und das Austauschen von Daten mittels des optoelektronischen Bauelements können alternativ oder gleichzeitig in einem erfindungsgemäßen Display verwirklicht werden. Sollen beide Funktionen verwirklicht werden, kann dies wahlweise mit demselben optoelektronischen Bauelement oder mit unterschiedlichen optoelektronischen Bauelementen geschehen, die vorzugsweise alle hinter dem Display angeordnet sind.

Die Stärke des Umgebungslichts kann bestimmt werden, indem dessen gesamtes Spektrum (100 nm bis 1 mm) oder selektiv Teile des Spektrums des Umgebungslichts gemessen werden.

Zusätzlich ist es möglich, von der Ansteuerung der Lichtquelle auf deren Lichtstärke zu schließen, um den Anteil des Umgebungslichts am gesamten gemessenen Licht zu bestimmen. Mit dem berechneten Wert der Lichtstärke der Lichtquelle kann der vom Sensor gemessenen Wert der Lichtstärke korrigiert werden, der von dem Umgebungslicht und der Lichtquelle herrührt. Für die erforderlichen Berechnungen eignen sich übliche Steuereinrichtungen beziehungsweise Mikrocontroller.

Durch die Anordnung des optoelektronischen Bauelements oder der optoelektronischen Bauelemente an einem Ort, der sich von einem Betrachter des Displays aus hinter den Flüssigkristallsrchichten befindet, kann exakt der Lichteinfall aus der Umgebung auf die Flüssigkristallschicht gemessen werden. Eine versehentliche Abdeckung oder Abschattung des optoelektronischen Bauelements kann nicht erfolgen.

Bei der Messung der Lichtstärke wird darauf geachtet, dass das Licht, das von der Hinterleuchtung stammt, nicht berücksichtigt wird. Dies kann beispielsweise durch den Einsatz eines Filters vor der Lichtquelle oder vor dem optoelektronischen Bauelement erreicht werden. Es kann aber auch ein Sensor eingesetzt werden, der selektiv nur einen Teil des Spektrums misst, und zwar dasjenige, das von der Hinterleuchtung nicht abgestrahlt wird.

Insbesondere bei sogenannten negativ Modus (negative mode) LC-Displays, bei denen die Information hell und der Hintergrund dunkel dargestellt wird, wird vorzugsweise wenigstens ein optoelektronisches Bauelement, das für den Spektralbereich über 780 nm empfindlich ist, eingesetzt. Üblicherweise absorbieren die in derartigen Displays eingesetzten Polfilter elektromagnetische Strahlung im sichtbaren Spektralbereich und im UV-Bereich, jedoch nicht im Infrarot-Bereich. Wird in einem negativ Modus Display als optoelektronisches Bauelement ein Sensor eingesetzt, der sichtbares Licht erfasst, so hängt daher die Messung der Lichtstärke jeweils davon ab, wie viele Segmente momentan angesteuert sind. Dagegen wird Licht im Spektralbereich über 900 nm nahezu nicht absorbiert, so dass eine Messung in diesem Bereich besonders sinnvoll ist.

Für die Messung der Lichtstärke in negativ Modus LC-Displays eignen sich besonders Infrarotsensoren, da eine Hinterleuchtung mit einer Kaltkathodenröhre oder mit Leuchtdioden keine oder keine nennenswerte Infrarotstrahlung emittiert. Daher kann regelmäßig auf die Vorschaltung eines Filters vor den Sensor oder die Lichtquelle der Hinterleuchtung verzichtet werden. Wird die Lichtstärkenmessung im nahen.Infrarotbereich (900 nm bis 1100 nm) vorgenommen, können auch keine Fehler infolge von Wärmestrahlung auftreten. Außerdem ist dieser Bereich besonders gut für eine Informationsübertragung nutzbar, da herkömmliche Sender und Empfänger (Sensoren) in diesem Wellenlängenbereich arbeiten.

Die Erfindung eignet sich besonders für transmissive LC-Displays, also für Displays, die nur mit Hinterleuchtung zu betreiben sind, und für LC-Displays, die Umgebungslicht reflektieren und zusätzlich mit einer Hinterleuchtung ausgerüstet sind (transflektive Displays). Solche transflektive Displays, wie sie beispielsweise in der Zeitschrift Elektronik 22/2000 auf Seite 32 vorgestellt sind, benötigen bei Tageslicht regelmäßig keine Hinterleuchtung. Dabei spielt es grundsätzlich keine Rolle, ob es sich um DSTN-, TN-, STN-, FSTN-, HAN, DAP, OMI oder sonstige LC-Displays handelt.

Weiter Vorteile, Merkmale und Anwendungsmöglichkeiten der Erfindung ergeben sich aus der nachfolgenden Beschreibung von Ausführungsbeispielen in Verbindung mit den Zeichnungen. Es zeigen:
- Figur 1: einen Schnitt durch ein transflektives LC-Display mit einem Lichtleiter und einem Reflektor,
- Figur 2: eine Ansicht des Lichtleiters von Figur 1, in der mögliche Positionen für ein optoelektronisches Bauelement dargestellt sind,
- Figur 3: ein Schnitt durch ein transflektives LC-Display mit einem Lichtkasten als Reflektor,
- Figur 4: eine Ansicht des Lichtkastens von Figur 3, in der mögliche Positionen des Bauelements dargestellt sind,
- Figur 5: ein durch ein negativ Modus LC-Display gemessenes Spektrum, bei dem keine Segmente durchgesteuert sind (dunkel geschaltet) und
- Figur 6: ein durch ein negativ Modus LC-Display gemessenes Spektrum, wenn alle Segmente des Displays durchgesteuert sind (hell geschaltet).

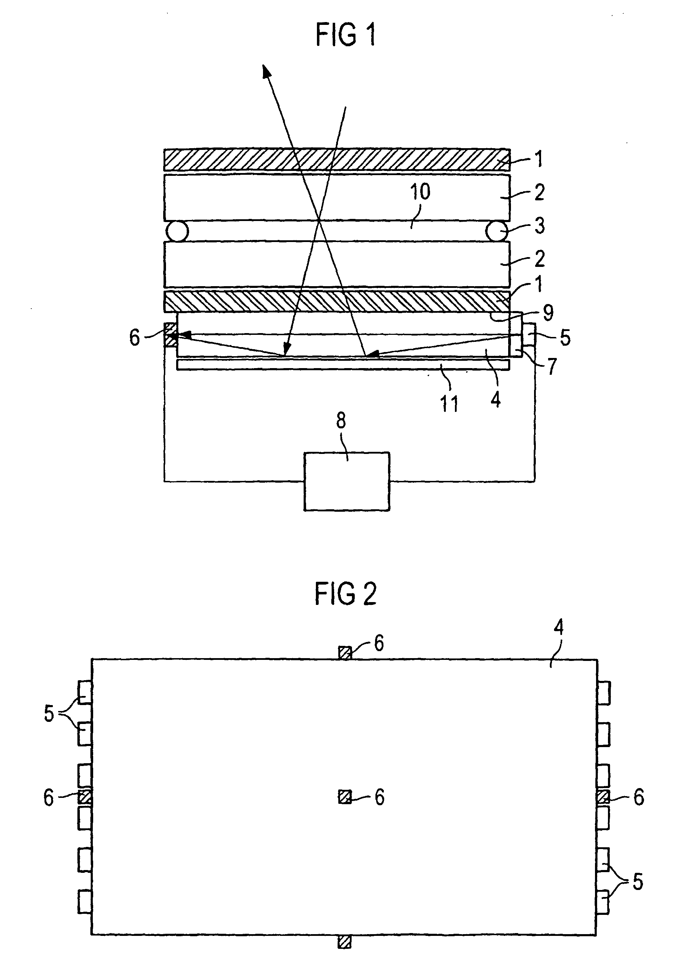

Figur 1 veranschaulicht ein einfaches transflektives LC-Display, das Tageslicht oder Umgebungslicht reflektiert und zusätzlich mit einer Hinterleuchtung versehen ist. Es weist einen vorderen und einen hinteren Polfilter 1 auf, zwischen denen zwei parallele Glassubstrate 2 angeordnet sind. Eine Flüssigkristallschicht 10 ist zwischen zwei Glassubstraten 2 eingebettet. Die Glassubstrate 2 sind über einen Kleberahmen 3 miteinander verbunden. Der Kleberahmen verhindert das Austreten des Flüssigkristalls.

Am hinteren Polfilter 1 des Displays ist ein Lichtleiter 4 angeordnet. Der Lichtleiter 4 befindet sich also auf einer Rückseite oder auf der Seite 9 (Rückseite) des Displays, die dem Betrachter abgewandt ist. In den Lichtleiter 4 wird von einer Lichtquelle 5 Licht zur Hinterleuchtung des Displays eingekoppelt und genauso wie einfallendes Umgebungslicht in Richtung des Betrachters reflektiert. Zu diesem Zweck ist der Lichtleiter 4 an seiner dem Glassubstrat abgewandten Seite mit einem Reflektor 11 versehen. Die Lichtquelle 5 ist parallel zu den Glassubstraten 2 angeordnet und sendet Licht nur eines Teils des sichtbaren Spektrums aus. Vorteilhafterweise handelt es sich um eine Lichtquelle, die. monochromes Licht bereitstellt.

Ein optoelektronisches Bauelement 6.ist.an einer Seite des Lichtleiters 4 angeordnet, die senkrecht zu den Glassubstraten 2 ausgerichtet ist. Das Bauelement 6 ist in einer Achse ausgerichtet, die im wesentlichen mit der Strahlungsachse der Lichtquelle 5 übereinstimmt. Das Bauelement 6 ist in einer Ebene parallel zu dem hinteren Polfilter 1 und von dem vorderen Polfilter weiter entfernt als von dem hinteren Polfilter angeordnet. Als optoelektronisches Bauelement 6 kommt ein Fototransistor, der als Empfänger und optional als Sender eingesetzt sein kann, eine Fotodiode oder ein anderes Lichtmessmittel (CCD) in Betracht. In diesem Ausführungsbeispiel handelt es sich bei dem Bauelement 6 um eine Fotodiode, die als Sensor dient.

Im Falle, dass die Lichtquelle in einem Spektralbereich abstrahlt, der von dem optoelektronischen Bauelement bzw. Sensor gemessen wird, ist zwischen Lichtquelle 5 und Lichtleiter 4 ein Filter 7 angeordnet, der das betreffende Spektrum herausfiltert. Es werden daher vom Sensor nur solche Spektralkomponenten gemessen, die von dem einstrahlenden Umgebungslicht, insbesondere dem Sonnenlicht, stammen. Dieses ist schematisch durch einen auf den Lichtleiter treffenden Lichtstrahl dargestellt.

Der Sensor ist in der Ebene der Lichtquelle angeordnet und daher für einen Betrachter des Displays nicht sichtbar. Eine eigene Gehauseöffnung für den Sensor und das Verlegen von elektrischen Leitungen zur Gehäusefront entfallen.

Das optoelektronische Bauelement 6 ist von einem nicht dargestellten Gehäuse und dem LC-Display nach außen hin vollständig abgedeckt.

Eine Steuereinrichtung 8, bei der es sich um einen Mikrocontroller handelt, steuert aufgrund der im Bereich des Lichtleiters 4 gemessenen Strahlungsstärke des Umgebungslichts die Leistung der Lichtquelle 5. Bei starkem auf das LC-Display auftreffenden Sonnenlicht ist das reflektierte Umgebungslicht für das Ablesen des Displays ausreichend. Bei abnehmender Stärke des Umgebungslichts erfolgt ein entsprechender Ausgleich durch die Lichtquelle 5.

Durch das Dimmen der Lichtquelle 5 entsprechend der Lichtstärke des auf das LC-Display einfallenden Umgebungslichts wird bei Tageslicht der Energieverbrauch deutlich reduziert. Die Ablesbarkeit bleibt bei allen möglichen Lichtverhältnissen gut.

Werden transmissive LCDs eingesetzt, muss bei starkem, auf das LC-Display auftreffendem Umgebungslicht die Intensität der Hinterleuchtung 5 erhöht werden. Bei abnehmendem Umgebungslicht wird die Hinterleuchtung gedimmt um den Energieverbrauch zu senken und den Betrachter nicht zu blenden.

In Figur 2 sind günstige Positionen für ein optoelektronisches Bauelement 6 oder mehrere Bauelemente 6 gezeigt. Das Bauelement 6 bzw. Sensor ist jeweils an einer Oberfläche des Lichtleiters 4 angeordnet. Dabei kann der Sensor seitlich an dem Lichtleiter 4 und parallel zur Strahlungsachse der Lichtquelle 5 befestigt sein. Eine Positionierung des oder der Bauelemente 6 im direkten Strahlengang des Umgebungslicht ist ebenfalls dargestellt. Die Lichtquelle 5 besteht aus einer Vielzahl von Leuchtdioden (LED).

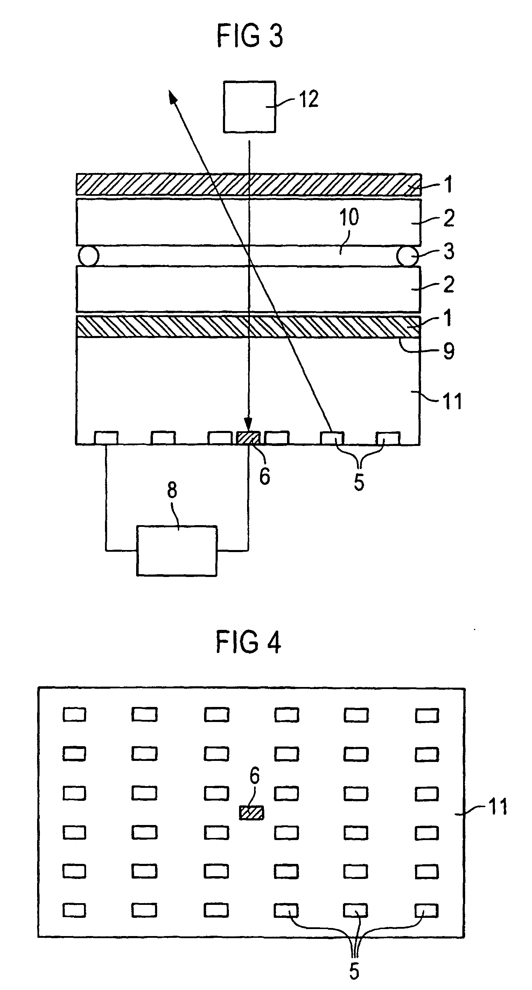

Figur 3 veranschaulicht ein optoelektronisches Bauelement 6 oder Sensor, das zentral auf einem Reflektor 11 angeordnet ist. Das optoelektronische Bauelement 6 empfängt von einem externen elektrischen Gerät 12 Daten und sendet Daten dorthin. Das elektrische Gerät kann eine Fernbedienung, ein Mobiltelefon, ein tragbarer Computer, ein Taschencomputer oder dergleichen sein.

Der Reflektor 11 ist ein Lichtkasten, der dazu dient, das von der Lichtquelle 5 stammende Licht möglichst gleichmäßig auf die Fläche des Displays zu verteilen. Die Lichtquelle 5, bei der es sich um eine Vielzahl von LEDs handelt, und der Sensor sind senkrecht zu den Glassubstraten 2 orientiert.

Die Anordnung der aus einer Vielzahl von Leuchtdioden bestehenden Lichtquelle 5 und des optoelektronischen Bauelements 6 am Reflektor 11 ist in Figur 4 besonders deutliche dargestellt.

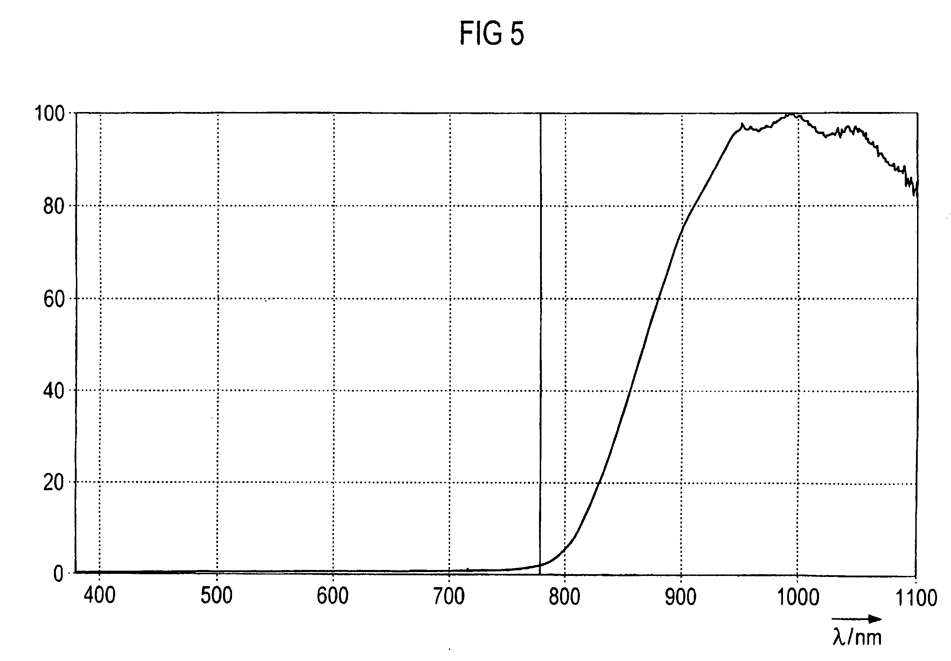

Figur 5 veranschaulicht ein Strahlungsspektrum, das mit einem hinter der Flüssigkristallschicht angeordneten Sensor, also einem Sensor der von der Flüssigkristallschicht.gegenüber dem Umgebungslicht abgedeckt ist, gemessen wurde. Die Messung erfolgte bei ausgeschalteter Lichtquelle an einem negativ Modus Display, bei dem keines seiner Segmente durchgesteuert ist..

Die Intensität der durch die Flüssigkristallschicht einfallenden und gemessenen Strahlung ist in Prozent über der Wellenlänge λ in nm angegeben. Für den beschriebenen Zustand zeigt sich, dass das Display einfallende Strahlung nur im Ultraviolett-Bereich und im Bereich des sichtbaren Lichts, also bis zu einer Wellenlänge von etwa 800 nm wirksam dämpft.

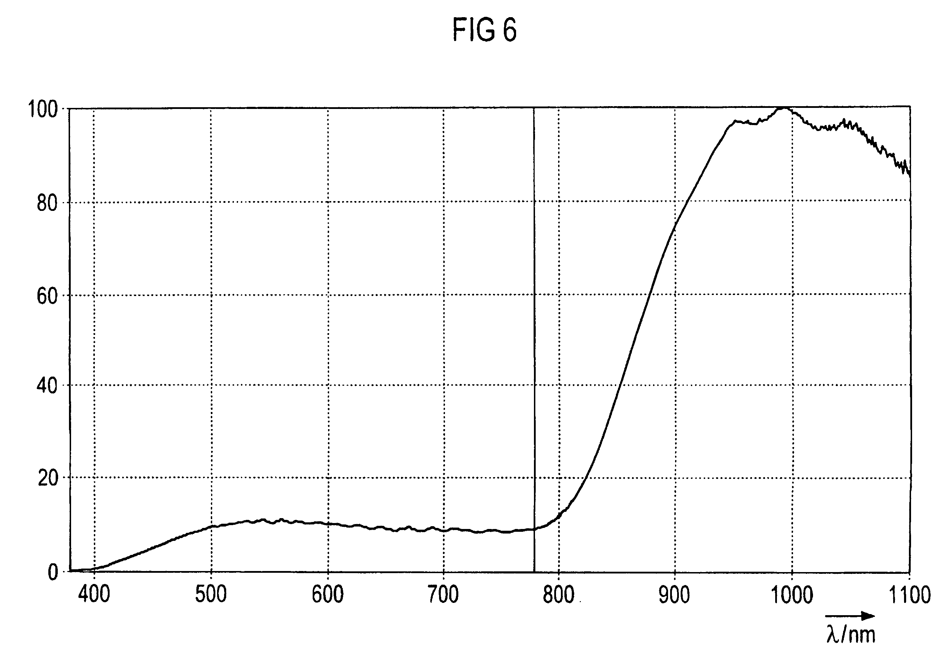

Figur 6 zeigt dieselbe Messung wie Figur 5 für den Zustand, dass alle Segmente durchgesteuert sind. Dabei erkennt man die Wirkungsweise der LCDs, Licht im sichtbaren Bereich, bis auf den Anteil der in den Polfiltern und durch Verluste verloren geht durchzulassen. Ab einer Wellenlänge von etwa 850 nm ist kein nennenswerter Unterschied zwischen den beiden in den Figuren 5 und 6 festgehaltenen Zuständen erkennbar. Ab etwa 900 nm bis etwa 1100 nm erfolgt keine nennenswerte Dämpfung der einfallenden Strahlung.

Eine Verfälschung des Messergebnisses ist also bereits ab einer Wellenlänge von wenigstens 850 nm ausgeschlossen. Ein besonders geeigneter Messbereich für den Sensor erstreckt sich wegen der geringen durch das Display bedingten Dämpfung im Bereich von 900 nm bis 1100 nm.

Wird für die Hinterleuchtung des Displays eine Lichtquelle mit schmalbandigem Spektrum eingesetzt, die Licht im wesentlichen nur in einem Spektrum abstrahlt, das außerhalb des Messbereichs des Sensors liegt, kann auf einen Filter zum Herausfiltern des Lichts der Lichtquelle verzichtet werden. Beim Einsatz von Infrarotsensoren in Verbindung mit einer LED-Lichtquelle wird daher regelmäßig kein Filter benötigt.

Solche Infrarotsensoren eignen sich auch für dem Empfang von Signalen, die von einem elektrischen Gerät abgestrahlt werden, um eine Datenverbindung mit einem mit dem Display elektrisch verbundenen Gerät herzustellen. Die Steuereinrichtung dient dann dazu, die empfangenen Signale in ihr Basisband umzusetzen. Neben dem Sensor zum Empfangen von Signalen kann auch ein Licht- bzw. Infrarotsender hinter der Flüssigkristallschicht angeordnet sein. Mit Sender und Empfänger kann ein Datenübertragungsprotokoll zu einem externen Gerät aufgebaut werden.

## Patentansprüche

1. Flüssigkristall-Display mit wenigstens einem optoelektronischen Bauelement, das aufweist:
- wenigstens eine Flüssigkristallschicht (10),
- eine Lichtquelle (5) zur Hinterleuchtung des Flüssigkristall-Displays, die an einer Seite (9) der wenigstens einen Flüssigkristallschicht (10) angeordnet ist, die einem Betrachter abgewandt ist,
- wenigstens ein optoelektronisches Bauelement (6), das an der Seite der wenigstens einen Flüssigkristallschicht (10) angeordnet ist, die dem Betrachter, abgewandt ist, zum Detektieren von Licht durch die Flüssigkristallschicht (10) hindurch,
**dadurch gekennzeichnet, dass** die Lichtquelle (5) nur einen Teil des Spektrums des Umgebungslichts aussendet, und dass das optoelektronische Bauelement (6) auf dasjenige Spektrum ausgerichtet ist, das nicht von der Lichtquelle (5) ausgesendet wird.

2. Flüssigkristall-Display nach Anspruch 1, **gekennzeichnet durch** eine mit dem optoelektronischen Bauelement (6) verbundene Steuereinrichtung (8), die die Leistung der Lichtquelle (5) in Abhängigkeit von der Lichtstärke des auf das optoelektronische Bauelement (6) einfallenden Umgebungslichts steuert.

3. Flüssigkristall -Display nach dem vorhergehenden Anspruch, **dadurch gekennzeichnet, dass** die Steuereinrichtung (8) die vom optoelektronischen Bauelement (6) gemessene Intensität mit einem Wert korrigiert, der aus der Ansteuerung der Lichtquelle ermittelt wird.

4. Flüssigkristall-Display nach Anspruch 1,
**gekennzeichnet durch** ein Filter (7) für die Lichtquelle (5), das das Spektrum herausfiltert, für das das wenigstens eine optoelektronische Bauelement (6) ausgelegt ist.

5. Flüssigkristall-Display nach einem der vorhergehenden Ansprüche,
**dadurch gekennzeichnet, dass** das optoelektronische Bauelement (6) ein Infrarotsensor ist.

6. Flüssigkristall-Display nach einem der vorhergehenden Ansprüche,
**dadurch gekennzeichnet, dass** das optoelektronische Bauelement (6) für einen Betrieb im nicht sichtbaren Spektralbereich ausgebildet ist.

7. Flüssigkristall-Display nach einem der vorhergehenden Ansprüche,
**dadurch gekennzeichnet, dass** das optoelektronische Bauelement (6) für einen Betrieb im Spektralbereich zwischen 900 nm und 1100 nm ausgebildet ist.

8. Flüssigkristall-Display nach einem der vorhergehenden Ansprüche,
**dadurch gekennzeichnet, dass** das Flüssigkristall-Display ein transflektives Display ist.

9. Flüssigkristall-Display nach einem der vorhergehenden Ansprüche,
**dadurch gekennzeichnet, dass** das Flüssigkristall-Display ein transmissives Display ist.

10. Flüssigkristall-Display nach einem der vorhergehenden Ansprüche,
**dadurch gekennzeichnet, dass** das wenigstens eine optoelektronische Bauelement (6) an einer Oberfläche eines Lichtleiters (4) angeordnet ist.

11. Flüssigkristall-Display nach einem der vorhergehenden Ansprüche,
**dadurch gekennzeichnet, dass** das wenigstens eine optoelektronische Bauelement (6) an einer Oberfläche eines Reflektors (11) angeordnet ist.

12. Flüssigkristall-Display nach einem der vorhergehenden Ansprüche,
**dadurch gekennzeichnet, dass** das wenigstens eine optoelektronische Bauelement (6) parallel zur Strahlungsachse der Lichtquelle (5) angeordnet ist.

13. Verfahren zum Steuern der Hinterleuchtung eines Flüssigkristall-Displays mit wenigstens einer Flüssigkristallschicht (2), mit den Schritten:
- es wird die Intensität der Umgebungsstrahlung auf der Seite (9) des Flüssigkristall-Displays ermittelt, auf der eine Lichtquelle (5) zur Hinterleuchtung des Displays angeordnet ist,
- in Abhängigkeit von der Intensität des Umgebungsstrahlung wird die Leistung der Lichtquelle (5) gesteuert,
**dadurch gekennzeichnet, dass** ein optoelektronisches Bauelement (6) selektiv nur einen Teil des Spektrums misst, der nicht von der Lichtquelle (5) abgestrahlt wird, um die Intensität des Umgebungslichts zu ermitteln.

14. Verfahren nach dem vorhergehenden Verfahrensanspruch, **dadurch gekennzeichnet, dass** nur die Intensität im nicht sichtbaren Spektralbereich der elektromagnetischen Strahlung gemessen wird.

15. Verfahren nach dem vorhergehenden Anspruch, **dadurch gekennzeichnet, dass** Strahlung im Spektralbereich zwischen 900nm bis 1100nm gemessen wird.

## Claims

1. Liquid crystal display comprising at least one optoelectronic component, which has:
- at least liquid crystal layer (10),
- a light source (5) for the background illumination of the liquid crystal display, which light source is arranged at a side (9) of the at least at one liquid crystal layer (10) which is remote from an observer,
- at least one optoelectronic component (6), which is arranged at the side of the at least one liquid crystal layer (10) which is remote from the observer, for detecting light through the liquid crystal layer (10),
**characterized in that** the light source (5) emits only a part of the spectrum of the ambient light, and **in that** the optoelectronic component (6) is oriented to that spectrum which is not emitted by the light source (5).

2. Liquid crystal display according to Claim 1, **characterized by** a controller (8), which is connected to the optoelectronic component (6) and controls the power of the light source (5) in a manner dependent on the light intensity of the ambient light incident on the optoelectronic component (6).

3. Liquid crystal display according to the preceding claim, **characterized in that** the controller (8) corrects the intensity measured by the optoelectronic component (6) with a value determined from the driving of the light source.

4. Liquid crystal display according to Claim 1, **characterized by** a filter (7) for the light source (5), which filters out the spectrum for which the at least one optoelectronic component (6) is designed.

5. Liquid crystal display according to one of the preceding claims,
**characterized in that** the optoelectronic component (6) is an infrared sensor.

6. Liquid crystal display according to one of the preceding claims,
**characterized in that** the optoelectronic component (6) is designed for operation in the non-visible spectral range.

7. Liquid crystal display according to one of the preceding claims,
**characterized in that** the optoelectronic component (6) is designed for operation in the spectral range between 900 nm and 1100 nm.

8. Liquid crystal display according to one of the preceding claims,
**characterized in that** the liquid crystal display is a transflective display.

9. Liquid crystal display according to one of the preceding claims,
**characterized in that** the liquid crystal display is a transmissive display.

10. Liquid crystal display according to one of the preceding claims,
**characterized in that** the at least one optoelectronic component (6) is arranged at a surface of an optical waveguide (4).

11. Liquid crystal display according to one of the preceding claims,
**characterized in that** the at least one optoelectronic component (6) is arranged at a surface of a reflector (11).

12. Liquid crystal display according to one of the preceding claims,
**characterized in that** the at least one optoelectronic component (6) is arranged parallel to the radiation axis of the light source (5).

13. Method for controlling the background illumination of a liquid crystal display comprising at least one liquid crystal layer (2), comprising the following steps:
- the intensity of the ambient radiation on the side (9) of the liquid crystal display on which a light source (5) for the background illumination of the display is arranged is determined,
- the power of the light source (5) is controlled in a manner dependent on the intensity of the ambient radiation,
**characterized in that** an optoelectronic component (6) selectively measures only a part of the spectrum which is not radiated by the light source (5), in order to determine the intensity of the ambient light.

14. Method according to the preceding method claim, **characterized in that** only the intensity in the non-visible spectral range of the electromagnetic radiation is measured.

15. Method according to the preceding claim, **characterized in that** radiation in the spectral range between 900 nm and 1100 nm is measured.

## Revendications

1. Ecran à cristaux liquides avec au moins un composant optoélectronique et comportant:
- au moins une couche de cristaux liquides (10),
- une source de lumière (5) destinée au rétroéclairage de l'écran à cristaux liquides et qui est disposée sur un côté (9) opposé à un observateur de la au moins une couche de cristaux liquides (10),
- au moins un composant optoélectronique (6), qui est disposé sur le côté opposé à l'observateur de la au moins une couche de cristaux liquides (10), destiné à détecter de la lumière à travers la couche de cristaux liquides (10),
**caractérisé par le fait que** la source de lumière (5) n'émet qu'une partie du spectre de la lumière ambiante et que le composant optoélectronique (6) est réglé sur le spectre qui n'est pas émis par la source de lumière (5).

2. Ecran à cristaux liquides selon la revendication 1 **caractérisé par** un dispositif de commande (8) relié au composant optoélectronique (6) et qui contrôle la puissance de la source de lumière (5) en fonction de l'intensité lumineuse d e la lumière ambiante incidente sur le composant électronique (6).

3. Ecran à cristaux liquides selon la revendication précédente **caractérisé par le fait que** le dispositif de commande (8) corrige l'intensité mesurée par le composant optoélectronique (6) avec une valeur qui est déterminée à partir de l'excitation de la source de lumière.

4. Ecran à cristaux liquides selon la revendication 1 **caractérisé par** un filtre (7) pour la source de lumière (5), qui filtre le spectre pour lequel le au moins un composant optoélectronique (6) est dimensionné.

5. Ecran à cristaux liquides selon l'une des revendications précédentes **caractérisé par le fait que** le composant optoélectronique (6) est un capteur à infrarouge.

6. Ecran à cristaux liquides selon l'une des revendications précédentes **caractérisé par le fait que** le composant optoélectronique (6) est conçu pour un fonctionnement dans la gamme non visible du spectre.

7. Ecran à cristaux liquides selon l'une des revendications précédentes **caractérisé par le fait que** le composant optoélectronique (6) est conçu pour un fonctionnement dans la gamme du spectre comprise entre 900 nm et 1100 nm.

8. Ecran à cristaux liquides selon l'une des revendications précédentes **caractérisé par le fait que** l'écran à cristaux liquides est un écran transflectif.

9. Ecran à cristaux liquides selon l'une des revendications précédentes **caractérisé par le fait que** l'écran à cristaux liquides est un écran transmissif.

10. Ecran à cristaux liquides selon l'une des revendications précédentes **caractérisé par le fait que** le au moins un composant optoélectronique (6) est disposé sur une surface d'un guide d'ondes lumineuses (4).

11. Ecran à cristaux liquides selon l'une des revendications précédentes **caractérisé par le fait que** le au moins un composant optoélectronique (6) est disposé sur une surface d'un réflecteur (11).

12. Ecran à cristaux liquides selon l'une des revendications précédentes **caractérisé par le fait que** le au moins un composant optoélectronique (6) est disposé en parallèle à l'axe de rayonnement de la source de lumière (5).

13. Procédé destiné à contrôler le rétroéclairage d'un écran à cristaux liquides avec au moins une couche de cristaux liquides (2) et comportant les étapes suivantes:
- on mesure l'intensité du rayonnement ambiant sur le côté (9) de l'écran à cristaux liquides sur lequel est disposée une source de lumière (5) destinée au rétroéclairage de l'écran,
- en fonction de l'intensité du rayonnement ambiant, on commande la puissance de la source de lumière (5),
**caractérisé par le fait qu'**un composant optoélectronique (6) mesure sélectivement seulement une partie du spectre qui n'est pas émise par la source de lumière (5) pour déterminer l'intensité de la lumière ambiante.

14. Procédé selon la revendication précédente **caractérisé par le fait que** l'intensité n'est mesurée que dans la plage visible du spectre du rayonnement électromagnétique.

15. Procédé selon la revendication précédente **caractérisé par le fait que** le rayonnement est mesuré dans la plage du spectre comprise entre 900 nm et 1100 nm.
